# EUROPEAN PATENT APPLICATION

(11) **EP 4 769 041 A1**
(43) Date of publication of application: **01.07.2026**
(21) Application number: 24383486.8
(22) Date of filing: 30.12.2024
(51) Int. Cl.: G05B 19/418

(54) **MANUFACTURING SYSTEM WITH REMOTE DETERMINATION OF QUALITY CONTROL RESULT DURING PRODUCTION**

(71) Applicant: The Boeing Company, Arlington, VA 22202 (US)
(72) Inventor: JEONG, Changik, 06164 Seoul (KR); BLANCO, Jose Antonio, 28042 Madrid (ES); CHAN, Kwok Tung, Everett, 98204 (US)
(74) Representative: ZBM Patents - Zea, Barlocci & Markvardsen

(57) **Abstract**

A manufacturing system including a manufacturing device that includes one or more integrated sensors. The manufacturing system further includes an edge computing device including an edge device processor configured to receive integrated sensor data measured during production of a manufactured part using the manufacturing device. The edge device processor transmits the integrated sensor data to a remote computing device. During the production of the manufactured part, the edge device processor receives a remote processing result from the remote computing device. The remote processing result includes a quality control result notification. The edge device processor, in response to receiving the quality control result notification, programmatically performs one or more auxiliary measurements of the manufactured part and/or manufacturing device to obtain auxiliary sensor data. The edge device processor outputs the quality control result notification and the auxiliary sensor data to a graphical user interface (GUI) displayed at the edge computing device.

## Description

### FIELD

This application is related to quality control during manufacturing of components such as aircraft components.

### BACKGROUND

When manufacturing processes are performed, quality control checks are performed on the manufactured parts. Consistent accuracy of quality control checking is of particular importance in areas such as aircraft component manufacturing in which the manufactured parts are designed to have high reliability and precision. In order to achieve this consistency in quality control checking, advanced sensor suites that collect large quantities of data on manufactured parts have been integrated into manufacturing systems. Using these sensor suites, detailed quality control checks can be performed on components manufactured for use in high-stakes environments.

### SUMMARY

According to one aspect of the present disclosure, a manufacturing system is provided, including a manufacturing device that includes one or more integrated sensors. The manufacturing system further includes an edge computing device including an edge device processor configured to receive integrated sensor data from the one or more integrated sensors. The integrated sensor data is measured during production of a manufactured part using the manufacturing device. The edge device processor is further configured to transmit the integrated sensor data to a remote computing device. During the production of the manufactured part, the edge device processor is further configured to receive a remote processing result from the remote computing device in response to transmitting the integrated sensor data. The remote processing result includes a quality control result notification. The edge device processor is further configured to, in response to receiving the quality control result notification, programmatically perform one or more auxiliary measurements of the manufactured part and/or the manufacturing device to thereby obtain auxiliary sensor data. The edge device processor is further configured to output the quality control result notification and the auxiliary sensor data to a graphical user interface (GUI) displayed at the edge computing device.

### BRIEF DESCRIPTION OF THE DRAWINGS

FIG. 1 schematically shows a manufacturing system including a manufacturing device and an edge computing device, where the edge computing device is configured to communicate with a remote computing device to receive a quality control result notification, according to one example embodiment.
FIG. 2 schematically shows the edge computing device and the remote computing device in additional detail when the remote computing device receives and processes integrated sensor data, according to the example of FIG. 1.
FIG. 3 schematically shows the edge computing device and the remote computing device in an example in which the remote computing device is configured to compute an updated quality control result notification, according to the example of FIG. 1.
FIG. 4 schematically shows the manufacturing system in an example in which the edge device processor is further configured to compute instructions to programmatically execute a manufacturing defect correction procedure on a manufactured part, according to the example of FIG. 1.
FIG. 5 schematically shows the manufacturing system in an example in which prior quality control results are included in a remote processing result, according to the example of FIG. 1.
FIG. 6 schematically shows example graphical user interface (GUI) elements that can be presented to a user of the edge computing device, according to the example of FIG. 1.
FIG. 7A shows a flowchart of a method for use with a manufacturing system, according to the example of FIG. 1.
FIGS. 7B-7E show additional steps of the method of FIG. 7A that can be performed in some examples.
FIG. 8 schematically shows an example computing system in which the edge computing device and the remote computing device can be included, according to the example of FIG. 1.

### DETAILED DESCRIPTION

Processing-intensive quality control checking processes, such as those that utilize machine learning models, are sometimes performed when components are manufactured for use in high-stakes environments. When the sensor suite included in a manufacturing system collects large quantities of sensor data, that sensor data can be impractical to use for quality control checking using local computing capabilities. The local computing capabilities can, for example, be those of an edge computing device that is located in the same factory as a manufacturing device and is used to control at least a portion of a manufacturing process.

According to the present disclosure, sensor data collected at a manufacturing device is instead offloaded to a remote computing device. The remote computing device has more advanced computing capabilities than the edge computing device and is therefore able to perform more computationally intensive quality control checks on the sensor data. In addition, at the remote computing device, centralized processing of data from a wider range of sources may be performed, relative to processing at the edge computing device. As discussed in further detail below, this remote processing allows the manufacturing system to make real-time adjustments during production of a manufactured part, such as to correct a manufacturing defect or measure auxiliary sensor data.

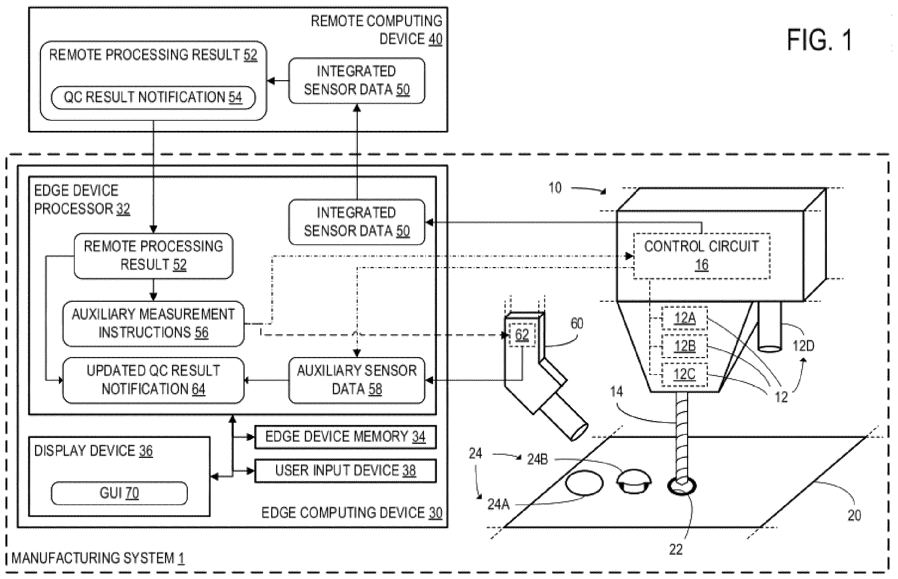

FIG. 1 schematically depicts an example manufacturing system 1 including a manufacturing device 10 and an edge computing device 30. The manufacturing device 10 in the example of FIG. 1 includes a plurality of integrated sensors 12, which are sensors that are provided within the manufacturing device 10. In addition, the manufacturing device 10 includes a control circuit 16, which can, for example, be a programmable logic controller (PLC). The control circuit 16 is configured to control one or more actuators included in the manufacturing device 10. In the example of FIG. 1, the manufacturing device 10 includes a drill, and the one or more actuators controlled using the control circuit 16 are configured to control the position and rotation of a drill bit 14. In other examples, the manufacturing device 10 can additionally or alternatively include other types of manufacturing tools such as a milling machine, a lathe, or a welding machine.

The manufacturing device 10 is shown in the example of FIG. 1 during production of a manufactured part 20. In this example, the manufacturing device 10 performs a drill-and-fill procedure in which the manufacturing device 10 drills holes 22 in the manufactured part 20 and inserts fasteners 24 into the holes 22. FIG. 1 shows a fastener 24A that does not exhibit any manufacturing defects. FIG. 1 further shows a fastener 24B that is not flush with the surface of the manufactured part and therefore exhibits a manufacturing defect.

In the example of FIG. 1, the integrated sensors 12 include a radial force sensor 12A, a thrust sensor 12B, a tip position sensor 12C, and an integrated camera 12D. The radial force sensor 12A is configured to measure a radial force applied to the drill bit 14. The thrust sensor 12B is configured to measure a thrust applied to the drill bit 14. The tip position sensor 12C is configured to measure a position of the tip of the drill bit 14. The integrated camera 12D is configured to measure image data of the manufactured part 20. In some examples, the manufacturing device 10 can include a plurality of integrated cameras 12D, which can, for example, measure image data of different portions of the manufactured part 20 and/or the manufacturing device 10. The example integrated camera 12D shown in FIG. 1 is an end-effector camera, although the integrated camera 12D may be located in other portions of the manufacturing device 10 in other examples. Additionally, a camera may be provided as an auxiliary sensor (discussed further below), and may be mounted externally to the manufacturing device, such as on a separate fixed support structure, or a separate movable support structure such as a crawler. Other types of integrated sensors 12 not shown in FIG. 1 can also be included in the manufacturing device 10 in some examples, such as a radial displacement sensor, a fluid flow sensor, and/or a fluid pressure sensor.

The edge computing device 30 includes an edge device processor 32 and edge device memory 34. The edge device processor 32 includes one or more edge processing devices, such as one or more central processing units (CPUs) and/or graphics processing units (GPUs). The edge device memory 34 includes one or more edge memory devices. The edge device memory can include volatile memory and non-volatile storage. In addition, the edge computing device 30 shown in FIG. 1 includes a display device 36 and one or more user input devices 38. The display device is configured to display a graphical user interface (GUI) 70 that is configured to receive user input via the one or more user input devices 38.

The edge device processor 32 is configured to receive integrated sensor data 50 from the one or more integrated sensors 12 of the manufacturing device 10. The integrated sensor data 50 is measured during production of the manufactured part 20 using the manufacturing device 10. For example, the manufacturing device 10 can communicate the integrated sensor data 50 to the edge device processor 32 via the control circuit 16.

The edge device processor 32 is further configured to transmit the integrated sensor data 50 to a remote computing device 40. The remote computing device 40 is located apart from the factory in which the manufacturing system 1 is located. For example, the remote computing device 40 can be a server computing device located in a data center. In some examples, the remote computing device 40 is a virtual computing device formed using a plurality of physical computing devices. In other examples, the remote computing device 40 is instantiated as a single physical computing device.

In some examples, the edge device processor 32 is configured to transmit all integrated sensor data 50 received from the manufacturing device 10 to the remote computing device 40. In other examples, the edge device processor 32 is further configured to filter the integrated sensor data 50 as a preprocessing operation and transmit the filtered integrated sensor data 50 to the remote computing device 40. Filtering the integrated sensor data 50 can save communication bandwidth between the edge computing device 30 and the remote computing device 40.

The remote computing device 40 is configured to process the integrated sensor data 50 offloaded from the edge computing device 30 to generate a remote processing result 52. Accordingly, the remote computing device 40 is configured to perform a quality control check based at least in part on the integrated sensor data 50. The remote processing result 52 includes a quality control result notification 54. Subsequently to computing the remote processing result 52, the remote computing device 40 is further configured to transmit the remote processing result to the edge computing device 30.

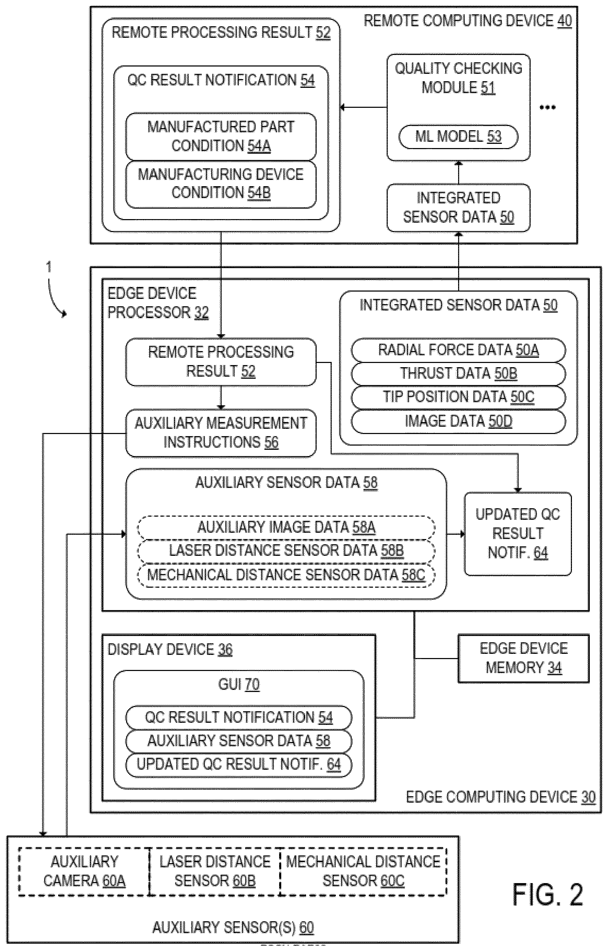

FIG. 2 schematically shows the edge computing device 30 and the remote computing device 40 in additional detail when the remote computing device 40 receives and processes the integrated sensor data 50, according to the example of FIG. 1. In the example of FIG. 2, the integrated sensor data 50 includes radial force data 50A received from the radial force sensor 12A, thrust data 50B received from the thrust sensor 12B, tip position data 50C received from the tip position sensor 12C, and image data 50D received from the one or more integrated cameras 12D.

The remote computing device 40 is configured to execute one or more quality checking modules 51 that each receive at least a portion of the integrated sensor data 50 as input. For example, a quality checking module 51 can include a machine learning model 53. The machine learning model 53 can, for example, be a classifier that is configured to compute a classification label associated with the integrated sensor data 50 it receives as input.

The quality control result notification 54 computed at the remote computing device 40 can include a manufactured part condition 54A. In such examples, the quality control result notification 54 indicates whether the manufactured part 20 passed or failed quality inspection. When the manufactured part 20 fails the quality control check, the quality control result notification 54 can indicate a reason for failure. The quality control result notification 54 includes more detailed information in some examples, such as respective values of one or more numerical parameters (e.g., hole diameter or fastener height) computed from the integrated sensor data 50 at the remote computing device 40. Those one or more numerical parameters can be compared to respective tolerance ranges to determine whether the values of those numerical parameters are within the tolerance ranges. In some examples, in response to receiving a quality control result notification 54 that indicates a quality inspection failure, the edge device processor 32 may be further configured to transmit instructions of the control circuit 16 to control the manufacturing device 10 to pause the manufacturing process. For example, the manufacturing process may be paused until a repair is made to the manufacturing device 10 or until the edge device processor 32 receives additional data.

In some examples, additionally or alternatively to the manufactured part condition 54A, the quality control result notification 54 can indicate a manufacturing device condition 54B of the manufacturing device 10. For example, the manufacturing device condition 54B can indicate whether the manufacturing device 10 is in a fully functional state. The manufacturing device condition 54B can be determined for individual components of the manufacturing device 10. As one example, the manufacturing device condition 54B can indicate an amount of wear on the drill bit 14.

The integrated sensor data 50 and/or the remote processing result 52 can be stored at the remote computing device 40 for later use. For example, when the one or more quality checking modules 51 include one or more machine learning models 53, the integrated sensor data 50 can be used as training data at the one or more machine learning models 53. As another example, the remote computing device 40 can be configured to track the manufacturing device condition 54B over time in order to determine when maintenance should be performed on the manufacturing device 10.

Returning to the example of FIG. 1, the edge device processor 32 is further configured to receive the remote processing result 52 from the remote computing device 40 in response to transmitting the integrated sensor data 50 to the remote computing device 40. The edge device processor 32 receives the remote processing result 52 during the production of the manufactured part 20. Therefore, as discussed in further detail below, the manufacturing process can be modified based at least in part on the remote processing result 52 while still ongoing.

In response to receiving the quality control result notification 54, the edge device processor 32 is further configured to programmatically perform one or more auxiliary measurements of the manufactured part 20 and/or the manufacturing device 10 to thereby obtain auxiliary sensor data 58. The one or more auxiliary measurements are performed at the one or more integrated sensors 12 and/or at one or more auxiliary sensors 60. The edge device processor 32 is configured to compute auxiliary measurement instructions 56 based at least in part on the remote processing result 52 and is further configured to transmit the auxiliary measurement instructions 56 to the one or more integrated sensors 12 and/or one or more auxiliary sensors 60. Although, in the example of FIG. 1, the auxiliary measurement instructions 56 are computed at the edge device processor 32, the auxiliary measurement instructions 56 can be computed at least in part at the remote computing device 40 in other examples.

In examples in which the one or more auxiliary measurements are performed at the one or more auxiliary sensors 60, one or more respective auxiliary sensor control circuits 62 are configured to execute the auxiliary measurement instructions 56 to thereby control the one or more auxiliary sensors 60. The auxiliary sensors 60 are sensors that are external to the manufacturing device 10. As shown in the example of FIG. 2, the one or more auxiliary sensors 60 can include one or more auxiliary cameras 60A, one or more laser distance sensors 60B, and/or one or more mechanical distance sensors 60C. Thus, the auxiliary sensor data 58 can include auxiliary image data 58A, laser distance sensor data 58B, and/or mechanical distance sensor data 58C. Other types of auxiliary sensors 60 can additionally or alternatively be used in other examples.

The edge device processor 32 is further configured to output the quality control result notification 54 and the auxiliary sensor data 58 to the GUI 70 displayed at the edge computing device 30. The user of the edge computing device 30 can therefore use the auxiliary sensor data 58 to check the accuracy of the programmatically computed quality control result notification 54. The edge device processor 32 can be configured to use the auxiliary sensor data 58 to disambiguate an ambiguous quality control result notification 54 received from the remote computing device 40. In addition, when the quality control result notification 54 indicates a quality control failure, the auxiliary sensor data 58 can give the user of the edge computing device 30 additional information with which to diagnose a cause of the quality control failure.

In some examples, as shown in FIG. 1, the edge device processor 32 is further configured to compute an updated quality control result notification 64 during production of the manufactured part 20 based at least in part on the auxiliary sensor data 58 and the remote processing result 52. The updated quality control result notification 64 is an updated version of the quality control result notification 54 that accounts for the auxiliary sensor data 58. The auxiliary sensor data 58 is accordingly used to refine the quality control determination performed at the remote computing device 40.

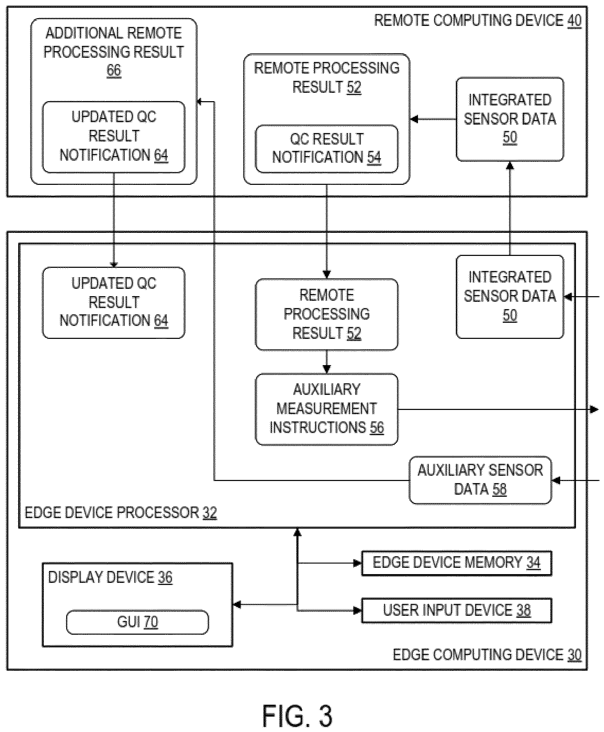

Although the edge device processor 32 computes the updated quality control result notification 64 in the example of FIG. 1, the updated quality control result notification 64 can instead be computed at the remote computing device 40 in some examples, as shown in FIG. 3. In such examples, during the production of the manufactured part 20, the edge device processor 32 is further configured to transmit the auxiliary sensor data 58 to the remote computing device 40 and receive the updated quality control result notification 64 as a response. The edge device processor 32 is further configured to output the updated quality control result notification 64 to the GUI 70.

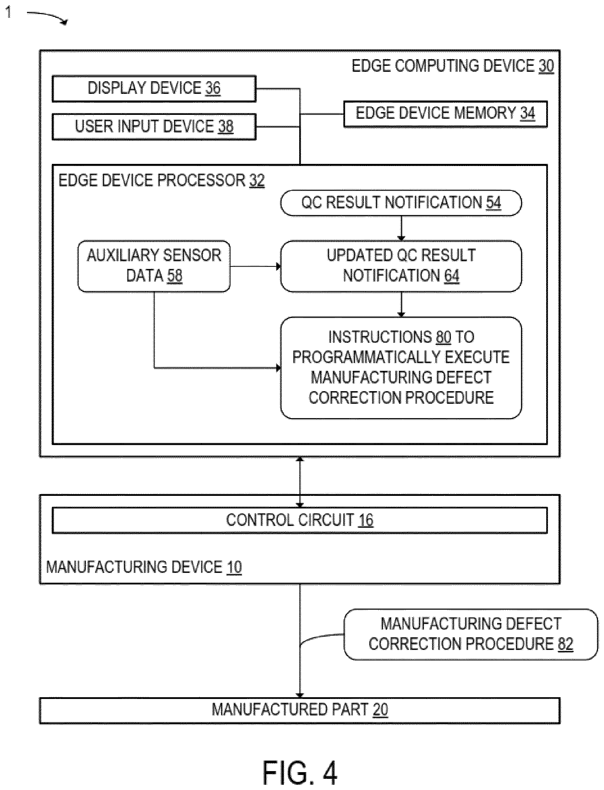

FIG. 4 schematically shows the manufacturing system 1 in an example in which the edge device processor 32 is further configured to compute instructions 80 to programmatically execute a manufacturing defect correction procedure 82 on the manufactured part 20. The edge device processor 32 is configured to compute the instructions 80 based at least in part on the quality control result notification 54. In examples in which an updated quality control result notification 64 is computed, the instructions 80 can be computed based at least in part on the updated quality control result notification 64. In some examples, the instructions 80 are computed at least in part at the remote computing device 40 and transmitted to the edge device processor 32.

The edge device processor 32 is further configured to transmit the instructions 80 to the manufacturing device 10, which is configured to execute those instructions 80 at the control circuit 16. For example, the manufacturing device 10 can re-drill a hole 22 or reinstall a fastener 24 as instructed by the edge device processor 32. Thus, the manufacturing device 10 is configured to utilize real-time feedback from the remote computing device 40 to adjust the manufacturing process when a manufacturing defect is detected.

In examples in which the auxiliary sensor data 58 is measured, the auxiliary sensor data 58 can also be used as an input when computing the instructions 80. However, the instructions 80 to perform the manufacturing defect correction procedure 82 can also be computed and output to the manufacturing device 10 in examples in which the edge computing device 30 does not measure the auxiliary sensor data 58.

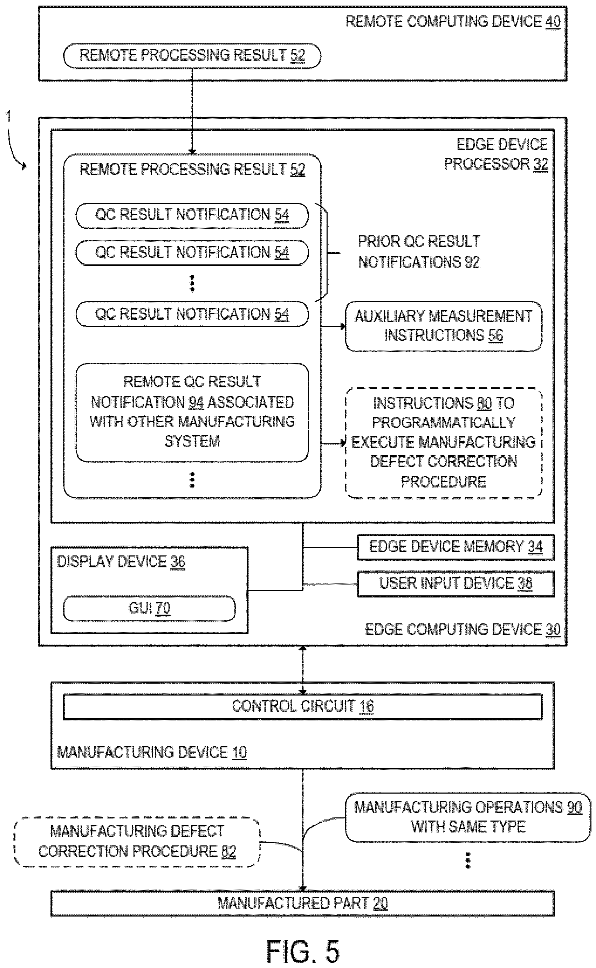

FIG. 5 schematically shows the manufacturing system 1 in an example in which prior quality control results are included in the remote processing result 52. In this example, the manufacturing device 10 is configured to perform a plurality of manufacturing operations 90 that have a same type (e.g., drilling, cutting, inserting, painting, or some other manufacturing operation type) on the manufactured part 20. The edge device processor 32 is configured to receive one or more prior quality control result notifications 92 associated with prior manufacturing operations 90 of the plurality of manufacturing operations 90 of that type that were previously performed on the manufactured part 20.

The edge device processor 32 is further configured to perform the one or more auxiliary measurements based at least in part on the one or more prior quality control result notifications 92. For example, the auxiliary measurement instructions 56 can include testing for a type of quality control failure that has previously been detected at the manufactured part 20 in association with a prior manufacturing operation 90.

In examples in which the manufacturing device 10 is configured to programmatically perform a manufacturing defect correction procedure 82, as shown in FIG. 4, the edge device processor 32 can be further configured to utilize the prior quality control result notifications 92 when computing the instructions 80 to programmatically execute the manufacturing defect correction procedure 82.

In some examples, as shown in FIG. 5, the remote processing result 52 further includes one or more remote quality control result notifications 94 associated with one or more other manufacturing systems. The other manufacturing systems are configured to perform the same type of manufacturing operation 90 as the manufacturing system 1. In some examples, the other manufacturing systems are configured to manufacture the same type of manufactured part 20 as the manufacturing system 1, whereas in other examples, the other manufacturing systems are configured to perform those manufacturing operations 90 during manufacturing of a different type of manufactured part.

In the example of FIG. 5, the edge device processor 32 is further configured to perform the one or more auxiliary measurements based at least in part on the one or more remote quality control result notifications 94. Using the one or more remote quality control result notifications 94, the edge device processor 32 is configured to use patterns identified across multiple manufacturing systems when computing the auxiliary measurement instructions 56. In examples in which the manufacturing device 10 is configured to programmatically perform a manufacturing defect correction procedure 82, the edge device processor 32 can be further configured to compute the instructions 80 to perform that manufacturing defect correction procedure 82 based at least in part on the one or more remote quality control result notifications 94.

As an example, if a factory that includes the manufacturing system 1 and the other manufacturing systems receives a batch of defective drill bits 14, the one or more remote quality control result notifications 94 can be used to identify quality control failures across multiple manufacturing systems that occur as a result of using those defective drill bits 14. Based at least in part on the one or more remote quality control result notifications 94, the edge device processor 32 can instruct the one or more auxiliary sensors 60 to perform auxiliary measurements of drill bits 14 and holes 22 drilled with those drill bits 14. Additionally or alternatively, the edge device processor 32 can instruct the manufacturing device 10 to execute a manufacturing defection correction procedure 82 such as re-drilling one or more holes 22 that were drilled with the defective drill bits 14. By utilizing the remote quality control result notifications 94, the edge device processor 32 is configured to adjust the manufacturing process in real time in a manner that is informed by integrated sensor data 50 and/or auxiliary sensor data 58 collected across multiple different manufacturing systems.

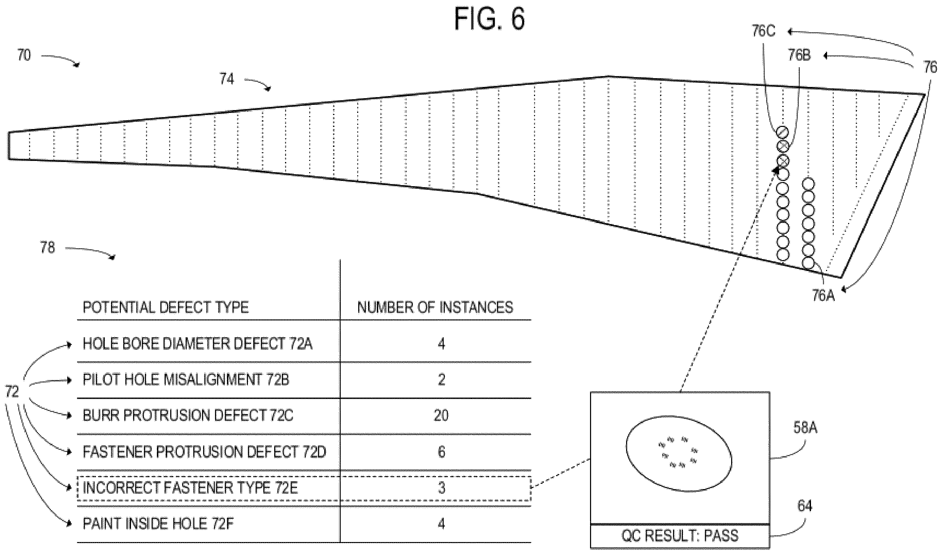

FIG. 6 schematically shows example GUI elements that can be presented to the user at the GUI 70. In the example of FIG. 6, the manufactured part 20 is an aircraft wing, and the GUI 70 displays a manufactured part view 74 of the aircraft wing that schematically shows the user different locations at which manufacturing operations 90 are performed. The manufactured part view 74 includes a plurality of quality control check indicators 76 that represent locations on the aircraft wing for which the edge device processor 32 has received respective quality control result notifications 54.

The plurality of quality control check indicators 76 depicted in FIG. 6 include a plurality of passed quality control indicators 76A associated with respective locations that passed the quality control check performed at the remote computing device 40. In addition, the plurality of quality control check indicators 76 include ambiguous quality control indicators 76B that indicate respective locations for which the quality control result notifications 54 indicate ambiguous results. The edge device processor 32 can, for example, flag the locations with ambiguous quality control indicators 76B as locations at which to collect auxiliary sensor data 58. The plurality of quality control check indicators 76 shown in FIG. 6 also include a failed quality control indicator 76C. The edge device processor 32 can flag the location with the failed quality control indicator 76C as a location at which to perform a manufacturing defect correction procedure 82.

The GUI 70, according to the example of FIG. 6, further displays a potential defect table 78. In the potential defect table 78, the GUI 70 shows, for each of a plurality of different manufacturing defect types 72, the numbers of potential manufacturing defects of that type that have occurred at the aircraft wing. In the example of FIG. 5, in which the manufacturing operation 90 is a drill-and-fill procedure, these manufacturing defect types 72 include a hole bore diameter defect 72A, a pilot hole misalignment 72B, a burr protrusion defect 72C, a fastener protrusion defect 72D, an incorrect fastener type 72E, and paint inside a hole 72F. A hole bore diameter defect 72A is a defect in which the diameter of a drilled hole 22 is outside a predefined diameter tolerance range. A pilot hole misalignment 72B is a defect in which the hole 22 is off-center from a corresponding pilot hole by a distance above a predefined misalignment tolerance threshold. A burr protrusion defect 72C is a defect in which a burr left behind by drilling a hole 22 protrudes past the surface of the manufactured part 20 by over a predefined burr protrusion threshold. A fastener protrusion defect 72D is a defect in which a fastener 24 protrudes from its hole 22 by over a predefined fastener protrusion threshold.

In the example of FIG. 6, the user has selected "incorrect fastener type" in the potential defect table 78. Accordingly, in the manufactured part view 74, the quality control check indicators 76 for the incorrect fastener type 72E are displayed in the manufactured part view 74. The user can view the quality control check indicators 76 associated with other manufacturing defect types 72 by selecting other rows of the potential defect table 78.

Auxiliary sensor data 58 is also displayed at the GUI 70 in the example of FIG. 6. In the example of FIG. 6, the auxiliary sensor data 58 is auxiliary image data 58A of one of the fasteners 24 that has an ambiguous quality control indicator 76B. The edge device processor 32 is further configured to display an updated quality control result notification 64 at the GUI 70 along with the auxiliary image data 58A in the example of FIG. 6. In this example, the edge device processor 32 has determined that the fastener 24 shown in the auxiliary image data 58A has the correct fastener type and therefore passes the quality control check. The auxiliary image data 58A accordingly resolves the ambiguity of the original quality control result notification 54.

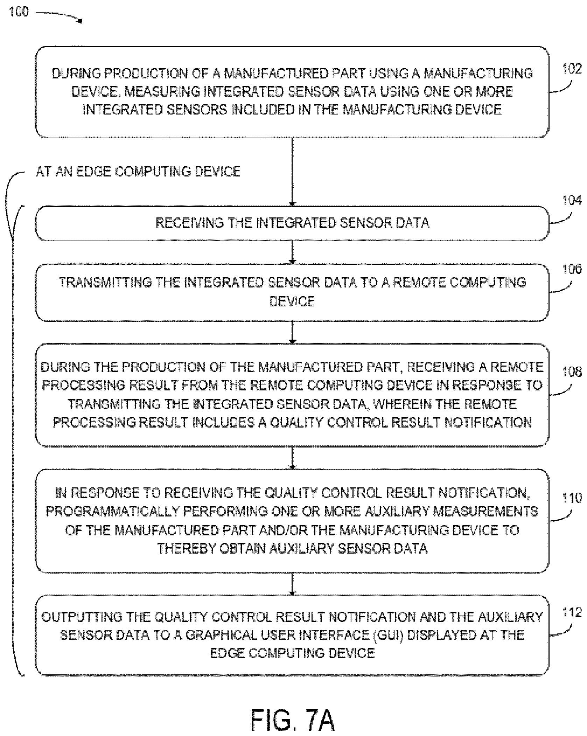

FIG. 7A shows a flowchart of a method 100 for use with a manufacturing system. In the example of FIG. 7A, the manufacturing system includes a manufacturing device and an edge computing device. The manufacturing device is configured to produce a manufactured part according to instructions received from the edge computing device.

The method 100 includes, at step 102, measuring integrated sensor data using one or more integrated sensors included in the manufacturing device. Step 102 is performed during production of the manufactured part using the manufacturing device.

In some examples, the manufacturing device includes a drill. The manufacturing device, in such examples, can be configured to perform a drill-and-fill procedure in which the manufacturing device drills one or more holes in the manufactured part and inserts fasteners into the holes. In other examples, some other type of manufacturing device such as a milling machine, a lathe, or a welding machine can be used as part of the manufacturing system additionally or alternatively to the drill. The one or more integrated sensors can include a radial force sensor, a thrust sensor, a tip position sensor, and/or one or more integrated cameras. Other types of integrated sensors can be used in other examples.

The method 100 further includes steps 104, 106, 108, 110, and 112, which are performed at an edge computing device located proximate to the manufacturing device. These steps are performed using an edge device processor included in the edge computing device. At step 104, the method 100 further includes receiving the integrated sensor data from the one or more integrated sensors.

At step 106, the method 100 further includes transmitting the integrated sensor data to a remote computing device. The remote computing device is located apart from the edge computing device and the manufacturing device. For example, the remote computing device can be located in a data center. In some examples, all the integrated sensor data is transmitted to the remote computing device, whereas in other examples, the integrated sensor data is filtered at the edge computing device before transmission to the remote computing device.

At step 108, during the production of the manufactured part, the method 100 further includes receiving a remote processing result from the remote computing device in response to transmitting the integrated sensor data. The remote processing result includes a quality control result notification. The quality control result notification can specify a manufactured part condition. For example, the quality control result notification can indicate whether the manufactured part passes quality control, fails quality control, or has an ambiguous quality control check result. More detailed results such as a quality control failure type or a numerical value relative to a tolerance range can additionally or alternatively be included in the remote processing result. In examples in which the manufacturing device includes a drill and is configured to perform a drill-and-fill procedure, the quality control result notification can include a notification of whether the manufactured part has a hole bore diameter defect, a pilot hole misalignment, a burr protrusion defect, a fastener protrusion defect, an incorrect fastener type, or paint inside a hole. Additionally or alternatively to the manufactured part condition, the quality control result notification can specify a manufacturing device condition. Accordingly, remote processing can be used when determining whether the manufacturing device is functioning properly.

At step 110, in response to receiving the quality control result notification, the method 100 further includes programmatically performing one or more auxiliary measurements of the manufactured part and/or the manufacturing device to thereby obtain auxiliary sensor data. In some examples, the one or more auxiliary measurements are performed with the one or more integrated sensors. The one or more auxiliary measurements can also be performed at least in part using one or more auxiliary sensors external to the manufacturing device. For example, the one or more auxiliary sensors can include one or more auxiliary cameras, one or more laser distance sensors, and/or one or more mechanical distance sensors. Other types of auxiliary sensors can be used in other examples.

At step 112, the method 100 further includes outputting the quality control result notification and the auxiliary sensor data to a graphical user interface (GUI) displayed at the edge computing device. Thus, the user is informed of the results of the quality control check performed at the remote computing device, and of the results of the one or more auxiliary measurements performed as a follow-up to the quality control check. The quality control result notification and the auxiliary sensor data can be output in real time during the manufacturing process, thereby allowing the user to adjust the manufacturing process while it is ongoing.

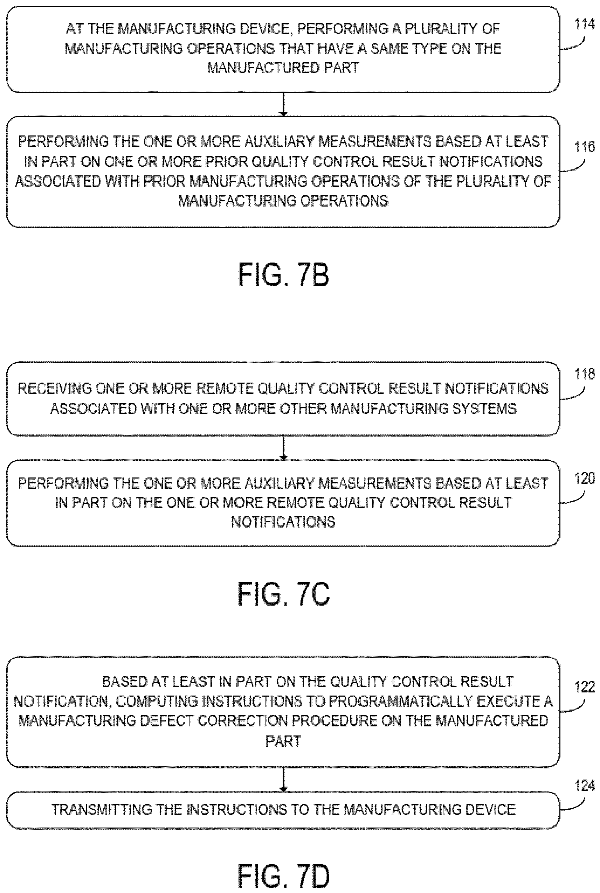

FIGS. 7B-7E show additional steps of the method 100 that are performed in some examples. FIG. 7B shows steps 114 and 116. At step 114, the method 100 can further include, at the manufacturing device, performing a plurality of manufacturing operations that have a same type on the manufactured part. For example, the same type can be "drilling operation" or "fastener insertion operation."

At step 116, the method 100 can further include performing the one or more auxiliary measurements based at least in part on one or more prior quality control result notifications associated with prior manufacturing operations of the plurality of manufacturing operations. Accordingly, the edge computing device can refer to the prior quality control result notifications when determining which auxiliary measurements to perform and the locations at which to perform them. For example, laser distance measurements of fastener height can be performed for each fastener included in a manufactured part after a fastener protrusion defect has been identified at that manufactured part.

FIG. 7C shows step 118, at which the method 100 can further include receiving one or more remote quality control result notifications associated with one or more other manufacturing systems. The one or more other manufacturing systems perform the same type of manufacturing operation as the manufacturing system at which the method 100 is performed, and in some examples manufacture the same type of manufactured part. The remote quality control result notifications indicate the results of quality control checks performed on the manufactured parts produced at the other manufacturing systems, and/or on manufacturing devices included in the other manufacturing systems.

At step 120, the method 100 can further include performing the one or more auxiliary measurements based at least in part on the one or more remote quality control result notifications. In some examples, the same type of auxiliary measurement is performed across a plurality of the manufactured systems, such as to check whether a manufacturing device defect occurs across multiple different manufacturing devices included in different manufacturing systems.

FIG. 7D shows steps of the method 100 that can be performed additionally or alternatively to the one or more auxiliary measurements. At step 122, based at least in part on the quality control result notification, the method 100 can further include computing instructions to programmatically execute a manufacturing defect correction procedure on the manufactured part. At step 124, the method 100 can further include transmitting the instructions to the manufacturing device. Accordingly, the manufacturing device can programmatically perform the manufacturing defect correction procedure in response to receiving a detection of a manufacturing defect.

In examples in which a plurality of manufacturing operations that have the same type are performed on the manufactured part, as in the example of FIG. 7B, the instructions to perform the manufacturing defect correction procedure can be generated based at least in part on the one or more prior quality control result notifications. In examples in which one or more remote quality control result notifications are received, as in the example of FIG. 7C, the instructions to perform the manufacturing defect correction procedure can be generated based at least in part on the one or more remote quality control result notifications.

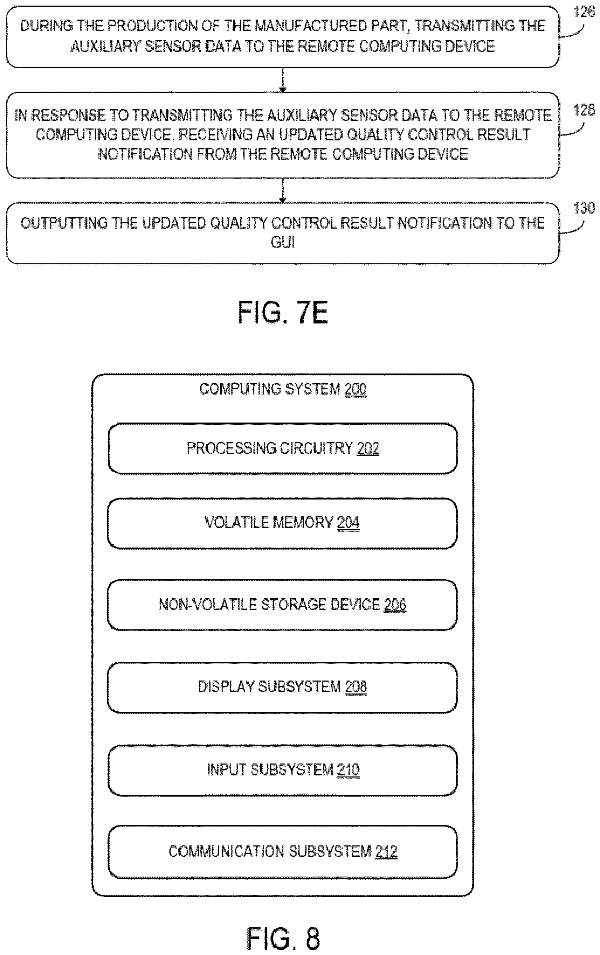

FIG. 7E shows additional steps of the method 100 that can be performed in some examples. At step 126, the method 100 can further include transmitting the auxiliary sensor data to the remote computing device during production of the manufactured part. At step 128, in response to transmitting the auxiliary sensor data to the remote computing device, the method 100 can further include receiving an updated quality control result notification from the remote computing device. Processing of the auxiliary sensor data is therefore also offloaded to the remote computing device in the example of FIG. 7E.

Using the devices and methods discussed above, quality control checks are performed during the manufacturing of a manufactured part. The results quality control checks can be used to guide and correct the manufacturing process in real time. Remote computing capabilities are utilized to perform computationally intensive quality control checks that could not be performed in real time at an edge computing device. The results of these quality control checks can then be used to guide auxiliary measurements and/or modify the manufacturing process. Remote computing is therefore integrated into the manufacturing process in a manner that allows for increased reliability in quality control determination and manufacturing defect correction.

FIG. 8 schematically shows a non-limiting embodiment of a computing system 200 that can enact one or more of the methods and processes described above. Computing system 200 is shown in simplified form. Computing system 200 can embody other computing system embodiments described above. Computing system 200 includes processing circuitry 202, volatile memory 204, and a non-volatile storage device 206. Computing system 200 can optionally include a display subsystem 208, input subsystem 210, communication subsystem 212, and/or other components not shown.

Processing circuitry 202 typically includes one or more processors, which are physical devices configured to execute instructions. For example, the processing circuitry 202 can be configured to execute instructions that are part of one or more applications, programs, routines, libraries, objects, components, data structures, or other logical constructs. Such instructions can be implemented to perform a task, implement a data type, transform the state of one or more components, achieve a technical effect, or otherwise arrive at a desired result.

The processing circuitry 202 can include one or more physical processors configured to execute software instructions. Additionally or alternatively, the processing circuitry 202 can include one or more hardware logic circuits or firmware devices configured to execute hardwareimplemented logic or firmware instructions. Processors of the processing circuitry 202 can be singlecore or multi-core, and the instructions executed thereon can be configured for sequential, parallel, and/or distributed processing. Individual components of the processing circuitry 202 optionally can be distributed among two or more separate devices, which can be remotely located and/or configured for coordinated processing. For example, aspects of the computing system 200 disclosed herein can be virtualized and executed by remotely accessible, networked computing devices configured in a cloud-computing configuration. In such a case, these virtualized aspects are run on different physical processing circuitry of various different machines, it will be understood. These different physical processing circuitries of the different machines will be understood to be collectively encompassed by processing circuitry 202.

Non-volatile storage device 206 includes one or more physical devices configured to hold instructions executable by the processing circuitry to implement the methods and processes described herein. When such methods and processes are implemented, the state of non-volatile storage device 206 can be transformed-e.g., to hold different data.

Non-volatile storage device 206 can include physical devices that are removable and/or built in. Non-volatile storage device 206 can include optical memory, semiconductor memory, and/or magnetic memory, or other mass storage device technology. Non-volatile storage device 206 can include nonvolatile, dynamic, static, read/write, read-only, sequential-access, locationaddressable, file-addressable, and/or content-addressable devices. It will be appreciated that nonvolatile storage device 206 is configured to hold instructions even when power is cut to the nonvolatile storage device 206.

Volatile memory 204 can include physical devices that include random access memory. Volatile memory 204 is typically utilized by processing circuitry 202 to temporarily store information during processing of software instructions. It will be appreciated that volatile memory 204 typically does not continue to store instructions when power is cut to the volatile memory 204.

Aspects of processing circuitry 202, volatile memory 204, and non-volatile storage device 206 can be integrated together into one or more hardware-logic components. Such hardware-logic components can include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" can be used to describe an aspect of computing system 200 typically implemented in software by a processor to perform a particular function using portions of volatile memory, which function involves transformative processing that specially configures the processor to perform the function. Thus, a module, program, or engine can be instantiated via processing circuitry 202 executing instructions held by non-volatile storage device 206, using portions of volatile memory 204. It will be understood that different modules, programs, and/or engines can be instantiated from the same application, service, code block, object, library, routine, API, function, etc. Likewise, the same module, program, and/or engine can be instantiated by different applications, services, code blocks, objects, routines, APIs, functions, etc. The terms "module," "program," and "engine" can encompass individual or groups of executable files, data files, libraries, drivers, scripts, database records, etc.

When included, display subsystem 208 can be used to present a visual representation of data held by non-volatile storage device 206. The visual representation can take the form of a graphical user interface (GUI). As the herein described methods and processes change the data held by the non-volatile storage device, and thus transform the state of the non-volatile storage device, the state of display subsystem 208 can likewise be transformed to visually represent changes in the underlying data. Display subsystem 208 can include one or more display devices utilizing virtually any type of technology. Such display devices can be combined with processing circuitry 202, volatile memory 204, and/or non-volatile storage device 206 in a shared enclosure, or such display devices can be peripheral display devices.

When included, input subsystem 210 can comprise or interface with one or more userinput devices such as a keyboard, mouse, touch screen, camera, or microphone.

When included, communication subsystem 212 can be configured to communicatively couple various computing devices described herein with each other, and with other devices. Communication subsystem 212 can include wired and/or wireless communication devices compatible with one or more different communication protocols. As non-limiting examples, the communication subsystem can be configured for communication via a wired or wireless local- or wide-area network, broadband cellular network, etc. In some embodiments, the communication subsystem can allow computing system 200 to send and/or receive messages to and/or from other devices via a network such as the Internet.

Further, the disclosure comprises configurations according to the following examples.

Example 1. A manufacturing system comprising: a manufacturing device that includes one or more integrated sensors; and an edge computing device including an edge device processor configured to: receive integrated sensor data from the one or more integrated sensors, wherein the integrated sensor data is measured during production of a manufactured part using the manufacturing device; transmit the integrated sensor data to a remote computing device; during the production of the manufactured part, receive a remote processing result from the remote computing device in response to transmitting the integrated sensor data, wherein the remote processing result includes a quality control result notification; in response to receiving the quality control result notification, programmatically perform one or more auxiliary measurements of the manufactured part and/or the manufacturing device to thereby obtain auxiliary sensor data; and output the quality control result notification and the auxiliary sensor data to a graphical user interface (GUI) displayed at the edge computing device.

Example 2. The manufacturing system of example 1, wherein the one or more integrated sensors include: a radial force sensor; a thrust sensor; a tip position sensor; and/or one or more integrated cameras.

Example 3. The manufacturing system of Example 1 or 2, wherein the edge device processor is configured to perform the one or more auxiliary measurements using one or more auxiliary sensors external to the manufacturing device.

Example 4. The manufacturing system of Example 3, wherein the one or more auxiliary sensors include one or more auxiliary cameras, one or more laser distance sensors, and/or one or more mechanical distance sensors.

Example 5. The manufacturing system of any of Examples 1-4, wherein the quality control result notification indicates a manufacturing device condition of the manufacturing device.

Example 6. The manufacturing system of any of Examples 1-5, wherein: the manufacturing device is configured to perform a plurality of manufacturing operations that have a same type on the manufactured part; and the edge device processor is further configured to perform the one or more auxiliary measurements based at least in part on one or more prior quality control result notifications associated with prior manufacturing operations of the plurality of manufacturing operations.

Example 7. The manufacturing system of any of Examples 1-6, wherein: the remote processing result further includes one or more remote quality control result notifications associated with one or more other manufacturing systems; and the edge device processor is further configured to perform the one or more auxiliary measurements based at least in part on the one or more remote quality control result notifications.

Example 8. The manufacturing system of any of Examples 1-7, wherein the edge device processor is further configured to: based at least in part on the quality control result notification, compute instructions to programmatically execute a manufacturing defect correction procedure on the manufactured part; and transmit the instructions to the manufacturing device.

Example 9. The manufacturing system of any of Examples 1-8, wherein the edge device processor is further configured to: during the production of the manufactured part, transmit the auxiliary sensor data to the remote computing device; in response to transmitting the auxiliary sensor data to the remote computing device, receive an updated quality control result notification from the remote computing device; and output the updated quality control result notification to the GUI.

Example 10. The manufacturing system of any of Examples 1-9, wherein: the manufacturing device includes a drill; and the manufacturing device is configured to perform a drill-and-fill procedure in which the manufacturing device drills one or more holes in the manufactured part and inserts fasteners into the holes.

Example 11. The manufacturing system of Example 10, wherein the quality control result notification includes a notification of whether the manufactured part has: a hole bore diameter defect; a pilot hole misalignment; a burr protrusion defect; a fastener protrusion defect; an incorrect fastener type; or paint inside a hole.

Example 12. A manufacturing system comprising: a manufacturing device that includes one or more integrated sensors; and an edge computing device including an edge device processor configured to: receive integrated sensor data from the one or more integrated sensors, wherein the integrated sensor data is measured during production of a manufactured part using the manufacturing device; transmit the integrated sensor data to a remote computing device; during the production of the manufactured part, receive a remote processing result from the remote computing device in response to transmitting the integrated sensor data, wherein the remote processing result includes a quality control result notification; based at least in part on the quality control result notification, compute instructions to programmatically execute a manufacturing defect correction procedure on the manufactured part; and transmit the instructions to the manufacturing device.

Example 13. The manufacturing system of Example 12, wherein the one or more integrated sensors include: a radial force sensor; a thrust sensor; a tip position sensor; and/or one or more integrated cameras.

Example 14. The manufacturing system of Example 13, wherein the edge device processor is configured to perform the one or more auxiliary measurements using one or more auxiliary sensors external to the manufacturing device.

Example 15. The manufacturing system of Example 14, wherein the one or more auxiliary sensors include one or more auxiliary cameras, one or more laser distance sensors, and/or one or more mechanical distance sensors.

Example 16. The manufacturing system of any of Examples 12-15, wherein the quality control result notification indicates a manufacturing device condition of the manufacturing device.

Example 17. The manufacturing system of any of Examples 12-16, wherein: the manufacturing device is configured to perform a plurality of manufacturing operations that have a same type on the manufactured part; and the edge device processor is further configured to compute the instructions to programmatically execute the manufacturing defect correction procedure based at least in part on one or more prior quality control result notifications associated with prior manufacturing operations of the plurality of manufacturing operations.

Example 18. The manufacturing system of any of Examples 12-17, wherein: the remote processing result further includes one or more remote quality control result notifications associated with one or more other manufacturing systems; and the edge device processor is further configured to compute the instructions to programmatically execute the manufacturing defect correction procedure based at least in part on the one or more remote quality control result notifications.

Example 19. A method for use with a manufacturing system, the method comprising: during production of a manufactured part using a manufacturing device, measuring integrated sensor data using one or more integrated sensors included in the manufacturing device; and at an edge computing device: receiving the integrated sensor data; transmitting the integrated sensor data to a remote computing device; during the production of the manufactured part, receiving a remote processing result from the remote computing device in response to transmitting the integrated sensor data, wherein the remote processing result includes a quality control result notification; in response to receiving the quality control result notification, programmatically performing one or more auxiliary measurements of the manufactured part and/or the manufacturing device to thereby obtain auxiliary sensor data; and outputting the quality control result notification and the auxiliary sensor data to a graphical user interface (GUI) displayed at the edge computing device.

Example 20. The method of Example 19, further comprising, at the edge computing device: based at least in part on the quality control result notification, computing instructions to programmatically execute a manufacturing defect correction procedure on the manufactured part; and transmitting the instructions to the manufacturing device.

It will be understood that the configurations and/or approaches described herein are exemplary in nature, and that these specific embodiments or examples are not to be considered in a limiting sense, because numerous variations are possible. The specific routines or methods described herein can represent one or more of any number of processing strategies. As such, various acts illustrated and/or described can be performed in the sequence illustrated and/or described, in other sequences, in parallel, or omitted. Likewise, the order of the above-described processes can be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A manufacturing system comprising:
a manufacturing device that includes one or more integrated sensors; and
an edge computing device including an edge device processor configured to:
receive integrated sensor data from the one or more integrated sensors, wherein the integrated sensor data is measured during production of a manufactured part using the manufacturing device;
transmit the integrated sensor data to a remote computing device;
during the production of the manufactured part, receive a remote processing result from the remote computing device in response to transmitting the integrated sensor data, wherein the remote processing result includes a quality control result notification;
and either
in response to receiving the quality control result notification, programmatically perform one or more auxiliary measurements of the manufactured part and/or the manufacturing device to thereby obtain auxiliary sensor data; and
output the quality control result notification and the auxiliary sensor data to a graphical user interface (GUI) displayed at the edge computing device;
or
based at least in part on the quality control result notification, compute instructions to programmatically execute a manufacturing defect correction procedure on the manufactured part; and
transmit the instructions to the manufacturing device.

2. The manufacturing system of claim 1, wherein the one or more integrated sensors include:
a radial force sensor;
a thrust sensor;
a tip position sensor; and/or
one or more integrated cameras.

3. The manufacturing system of claim 1 or 2, wherein the edge device processor is configured to perform the one or more auxiliary measurements using one or more auxiliary sensors external to the manufacturing device.

4. The manufacturing system of claim 3, wherein the one or more auxiliary sensors include one or more auxiliary cameras, one or more laser distance sensors, and/or one or more mechanical distance sensors.

5. The manufacturing system of any one of claims 1 to 4, wherein the quality control result notification indicates a manufacturing device condition of the manufacturing device.

6. The manufacturing system of any one of claims 1 to 5, wherein:
the manufacturing device is configured to perform a plurality of manufacturing operations that have a same type on the manufactured part; and
the edge device processor is further configured to perform the one or more auxiliary measurements based at least in part on one or more prior quality control result notifications associated with prior manufacturing operations of the plurality of manufacturing operations.

7. The manufacturing system of any one of claims 1 to 6, wherein:
the remote processing result further includes one or more remote quality control result notifications associated with one or more other manufacturing systems; and
the edge device processor is further configured to perform the one or more auxiliary measurements based at least in part on the one or more remote quality control result notifications.

8. The manufacturing system of any one of claims 1 to 7, wherein the edge device processor is further configured to:
based at least in part on the quality control result notification, compute instructions to programmatically execute a manufacturing defect correction procedure on the manufactured part; and
transmit the instructions to the manufacturing device.

9. The manufacturing system of any one of claims 1 to 8, wherein the edge device processor is further configured to:
during the production of the manufactured part, transmit the auxiliary sensor data to the remote computing device;
in response to transmitting the auxiliary sensor data to the remote computing device, receive an updated quality control result notification from the remote computing device; and
output the updated quality control result notification to the GUI.

10. The manufacturing system of any one of claims 1 to 9, wherein:
the manufacturing device includes a drill; and
the manufacturing device is configured to perform a drill-and-fill procedure in which the manufacturing device drills one or more holes in the manufactured part and inserts fasteners into the holes.

11. The manufacturing system of claim 10, wherein the quality control result notification includes a notification of whether the manufactured part has:
a hole bore diameter defect;
a pilot hole misalignment;
a burr protrusion defect;
a fastener protrusion defect;
an incorrect fastener type; or
paint inside a hole.

12. The manufacturing system of any one of claims 1 to 11, wherein:
the manufacturing device is configured to perform a plurality of manufacturing operations that have a same type on the manufactured part; and
the edge device processor is further configured to compute the instructions to programmatically execute the manufacturing defect correction procedure based at least in part on one or more prior quality control result notifications associated with prior manufacturing operations of the plurality of manufacturing operations.

13. The manufacturing system of claim 1 or 12, wherein:
the remote processing result further includes one or more remote quality control result notifications associated with one or more other manufacturing systems; and
the edge device processor is further configured to compute the instructions to programmatically execute the manufacturing defect correction procedure based at least in part on the one or more remote quality control result notifications.

14. A method for use with a manufacturing system of any one of claims 1 to 13, the method comprising:
during production of a manufactured part using a manufacturing device, measuring integrated sensor data using one or more integrated sensors included in the manufacturing device; and
at an edge computing device:
receiving the integrated sensor data;
transmitting the integrated sensor data to a remote computing device;
during the production of the manufactured part, receiving a remote processing result from the remote computing device in response to transmitting the integrated sensor data, wherein the remote processing result includes a quality control result notification;
in response to receiving the quality control result notification, programmatically performing one or more auxiliary measurements of the manufactured part and/or the manufacturing device to thereby obtain auxiliary sensor data; and
outputting the quality control result notification and the auxiliary sensor data to a graphical user interface (GUI) displayed at the edge computing device.

15. The method of claim 14, further comprising, at the edge computing device:
based at least in part on the quality control result notification, computing instructions to programmatically execute a manufacturing defect correction procedure on the manufactured part; and
transmitting the instructions to the manufacturing device.
